# EUROPEAN PATENT APPLICATION

(11) **EP 4 283 583 A1**
(43) Date of publication of application: **29.11.2023**
(21) Application number: 21921204.0
(22) Date of filing: 17.11.2021
(51) Int. Cl.: G07G 1/00

(54) **PRODUCT SALES DATA PROCESSING DEVICE**

(30) Priority: 20.01.2021 JP 2021007160
(71) Applicant: Toshiba TEC Kabushiki Kaisha, Tokyo 141-8562 (JP)
(72) Inventor: TANIHIRA, Taiki, Tokyo 141-8562 (JP); KANEKO, Toshihiro, Tokyo 141-8562 (JP); KAWAGUCHI, Yuki, Tokyo 141-8562 (JP); MIYASHIMA, Atsushi, Tokyo 141-8562 (JP); YAJIMA, Shinsuke, Tokyo 141-8562 (JP); ITO, Masaki, Tokyo 141-8562 (JP); NAITO, Hidehiro, Tokyo 141-8562 (JP); SAITOU, Takahiro, Tokyo 141-8562 (JP)
(74) Representative: Hoffmann Eitle
(86) International application number: PCT/JP2021/042230
(87) International publication number: WO 2022/158101

(57) **Abstract**

There are provided a product placing portion provided for placing a product; a scanner that is provided on a downstream side of the product placing portion in a movement direction of the product and that reads a symbol attached to the product removed from the product placing portion; a bagging portion that is provided on a downstream side of the scanner in the movement direction of the product and that is provided for bagging the product whose symbol has been read by the scanner into a bag that has been set; an article placing portion including a placing portion provided for placing an article related to sale of the product on an upper surface, provided below an installation position of the scanner between the product placing portion and the bagging portion; and a regulating portion that regulates protrusion of the product placed on the product placing portion to the article placing portion.

## Description

### FIELD

Embodiments of the present invention relate to a product sales data processing device.

### BACKGROUND

In product sales in a store such as a supermarket and a convenience store, a self-service product sales data processing device (e.g., self-service point of sales (POS) terminal) may be used. A customer himself/herself operates the device to perform product registration processing and settlement processing. In such a self-service product sales data processing device, a scanner is installed. The customer himself/herself removes a product from a basket, and causes the scanner to read a symbol such as a barcode. The customer bags the product whose symbol has been read by the scanner into a shopping bag set in a bagging portion.

The scanner has often been provided immediately above the bagging portion. Therefore, if the customer performs an operation of, for example, raising a product in a shopping bag for organizing the inside of the shopping bag at the time when the product whose symbol has been read by the scanner is bagged, there arises a problem of putting the product close to the scanner immediately above and erroneously reading the symbol again.

### SUMMARY OF THE INVENTION

### Problem to be Solved by the Invention

A challenge to be solved by the present invention is to provide a product sales data processing device that prevents a symbol attached to a product from being erroneously read.

### Means for Solving Problem

A product sales data processing device of an embodiment comprising: a product placing portion provided for placing a product; a scanner that is provided on a downstream side of the product placing portion in a movement direction of the product and that reads a symbol attached to the product removed from the product placing portion; a bagging portion that is provided on a downstream side of the scanner in the movement direction of the product and that is provided for bagging the product whose symbol has been read by the scanner into a bag that has been set; an article placing portion including a placing portion provided for placing an article related to sale of the product on an upper surface, provided below an installation position of the scanner between the product placing portion and the bagging portion; and a regulating portion that regulates protrusion of the product placed on the product placing portion to the article placing portion.

### BRIEF DESCRIPTION OF DRAWINGS

FIG. 1 is a perspective view of a product sales data processing device of a first embodiment.
FIG. 2 is a front view of the product sales data processing device.
FIG. 3 is a plan view of the product sales data processing device.
FIG. 4 is a front view of a product sales data processing device of a second embodiment.

### DETAILED DESCRIPTION

### (First Embodiment)

A first embodiment will be described below with reference to the drawings. In the first embodiment, a self-service POS terminal (hereinafter, referred to as "self-POS terminal") operated by a customer himself/herself will be described as one example of a product sales data processing device. Note that the invention is not limited by the first embodiment to be described below.

The self-POS terminal according to the first embodiment is installed in a checkout department of a store. The store displays products to be purchased by customers. A symbol is attached to a product or a container (e.g., bag and box) into which the product is placed. The symbol is coded information, and includes information (e.g., product code) for identifying a product to which the symbol is attached. The customers receive a basket when entering the store, and put a product to be purchased into the basket.

The self-POS terminal is a device operated by a customer himself/herself to perform a product registration operation and a settlement operation. In the product registration operation, a scanner reads a symbol attached to the product to be purchased by the customer. In the settlement operation, settlement is made for the product.

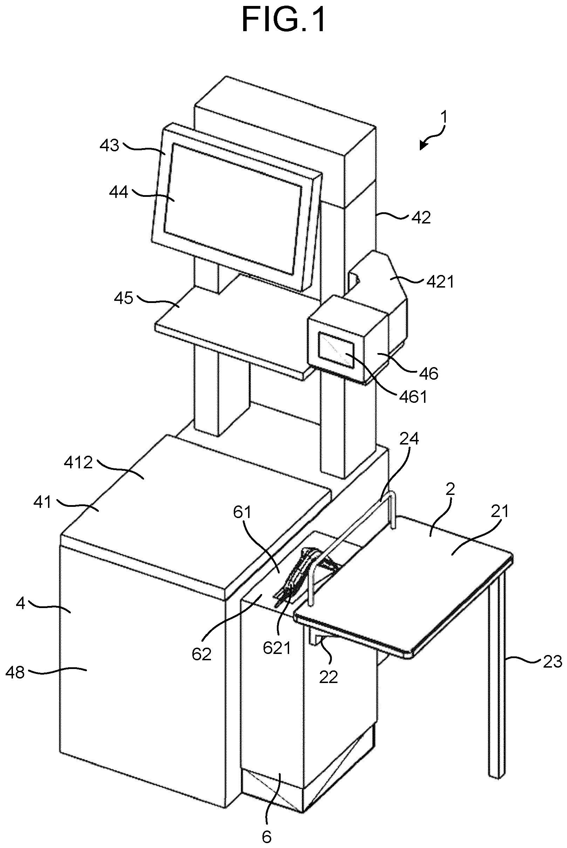

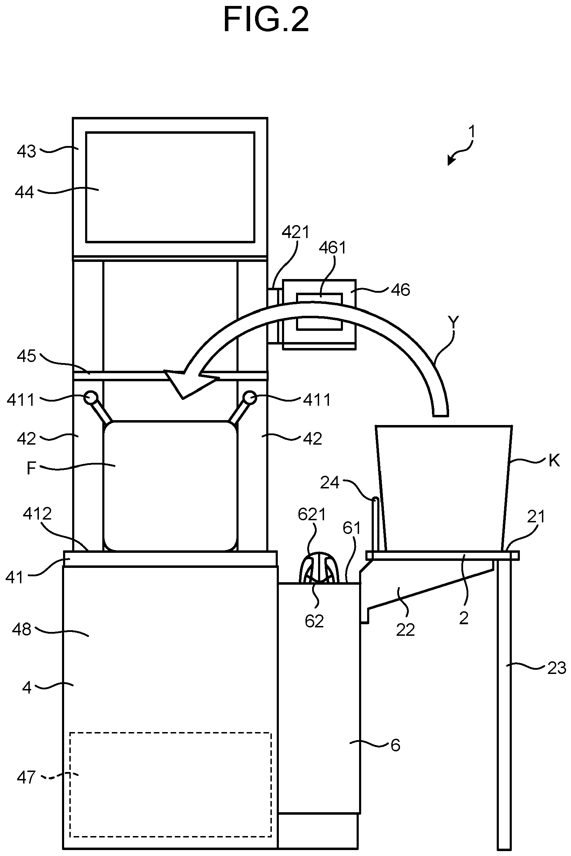

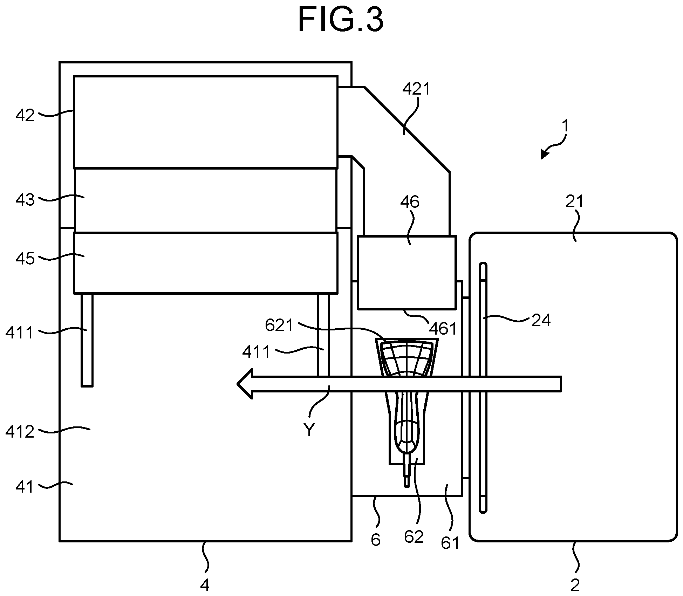

FIG. 1 is a perspective view of a self-POS terminal 1 of the first embodiment. FIG. 2 is a front view of the self-POS terminal 1 of the first embodiment. FIG. 3 is a plan view (top view) of the self-POS terminal 1 of the first embodiment.

As illustrated in FIGS. 1 to 3, the self-POS terminal 1 of the first embodiment includes a basket placing table 2 (product placing portion), a product register 4, and an article placing portion 6. The basket placing table 2 is provided for placing a basket K containing a product. That is, the basket placing table 2 is provided for indirectly placing the product. The basket placing table 2 is attached to the article placing portion 6 by an attachment member 22. Furthermore, the basket placing table 2 has a leg 23. The leg 23 supports the basket placing table 2 on a side opposite to the side where the basket placing table 2 is attached to the article placing portion 6. Furthermore, the basket placing table 2 has a basket placing surface 21 facing upward. The basket placing surface 21 is kept substantially horizontal by the leg 23. The basket placing surface 21 is large enough to place the basket K. Note that the basket placing table 2 may be a table on which a product is directly placed.

Furthermore, the basket placing table 2 includes a stopper 24, which is one example of a regulating portion, at the boundary with the article placing portion 6. The stopper 24 is formed by bending a rod-shaped metal into a substantially U shape, for example. The stopper 24 protrudes upward from the basket placing surface 21 substantially at an end on the side of the article placing portion 6. The stopper 24 is attached in a direction direct to a product flow direction to be described later. The stopper 24 abuts on the basket K to regulate movement of the basket K in the direction of the article placing portion 6.

The product register 4 is installed in proximity to the basket placing table 2. The product register 4 is a device that reads a symbol attached to a product removed from the basket K and that performs product registration processing and settlement processing. The product register 4 includes a bagging portion 41, a display 43, a scanner 46, and a controller 47. The scanner 46 is provided on the downstream side of the basket placing table 2 in a movement direction of a product. Furthermore, the bagging portion 41 is provided on the downstream side of the scanner 46 in the movement direction of a product.

The controller 47 is provided in a housing 48 provided in a lower portion of the product register 4. The controller 47 includes an electric circuit and a power supply including a central processing unit (CPU), a read only memory (ROM), and a random access memory (RAM) (all not illustrated) for controlling the self-POS terminal 1. Note that the controller 47 may be provided at a place other than a place inside the housing 48. For example, the controller 47 may be provided inside the display 43.

Two pillars 42 stand upward from an upper portion on a rear side of the housing 48. A temporary placing table 45, the scanner 46, and the display 43 are attached to the pillars 42 in this order from the bottom.

The scanner 46 is attached to a right pillar 42 by a support 421 protruding rightward (upstream in product flow direction) from the pillar 42. That is, the scanner 46 is provided on the right side (upstream side in product flow direction) of the product register 4. In other words, the product register 4 is provided on the downstream side of the scanner 46 in the product flow direction.

The scanner 46 includes a reading window 461 facing a customer who performs a symbol reading operation. The scanner 46 incorporates a camera, and images and reads a symbol attached to a product passing in front of the reading window 461 with the camera. Alternatively, the product register 4 emits laser light, and optically receives and reads reflected light reflected by the symbol attached to a product passing in front of the reading window 461. In the first embodiment, the scanner 46 images and reads a symbol with the camera.

The display 43 is attached at an upper position of the pillars 42 (height position where customer can easily see the display 43) with a display surface thereof facing a customer. Information is displayed to a customer who operates the self-POS terminal 1. The display 43 analyzes the symbol read by the scanner 46 to acquire a product code for identifying the product. The display 43 reads and displays product information (e.g., product name and price) on a product identified by the product code. The display 43 is attached so as to be adjustable in angle in a right and left direction and an up and down direction with respect to the pillars 42 so that the display 43 has an angle, at which a customer can easily see the display 43, depending on the height of the customer and the like.

A touch panel 44 is provided on the display surface of the display 43. A position corresponding to an image of a key displayed on the display 43 of the touch panel 44 is operated, so that the touch panel 44 functions as a keyboard by which the displayed key can be operated.

The bagging portion 41 is an area where a product is put into a bag F (e.g., plastic shopping bag and reusable shopping bag) set on extending rods 411 extending substantially horizontally from the pillars 42. The bag F is set on the extending rods 411 by a customer. The bottom surface of the bag F is in contact with a bag placing surface 412 with the bag F being set on the extending rods 411. The customer puts the product whose symbol has been read by the scanner 46 into the bag F, so that the product is bagged. The customer confirms that information on the product whose symbol has been read by the scanner 46 is displayed on the display 43, and then bags the product. Note that the basket placing surface 21 of the basket placing table 2 and the bag placing surface 412 of the bagging portion 41 have substantially the same height.

The temporary placing table 45 is provided for temporarily placing a product which is easily broken or a product whose shape is easily broken (e.g., tofu, egg, breads, and assorted sashimi) among products whose symbols have been read by the scanner 46. These products are bagged in an upper portion in the bag F by being bagged last after other products are bagged.

The article placing portion 6 will now be described. The article placing portion 6 is provided adjacent to the upstream side of the product register 4 in the product flow direction. As described above, the basket placing table 2 is attached to the article placing portion 6, so that the article placing portion 6 is interposed between the basket placing table 2 and the product register 4. Specifically, the article placing portion 6 is located between the basket placing table 2 and the product register 4, and is disposed adjacent to or in contact with the basket placing table 2 and the product register 4.

A placing portion 62 for placing an article related to product sales is provided on an upper surface 61 of the article placing portion 6. In the first embodiment, a handheld touch scanner 621 is one example of the article related to product sales. The touch scanner 621 has substantially the same function as the scanner 46, and reads a symbol attached to a product. In the first embodiment, the touch scanner 621 is configured to receive reflected light at a symbol of a liquid emitting diode (LED) emitted from the inside with an image sensor disposed on a line and read the symbol. The placing portion 62 is a placing table for the touch scanner 621.

The upper surface 61 of the article placing portion 6 is recessed downward from the basket placing surface 21 of the basket placing table 2 and the bag placing surface 412 of the bagging portion 41. The article placing portion 6, however, has an upwardly protruding shape by providing the placing portion 62 on the upper surface 61 of the article placing portion 6. Specifically, the article placing portion 6 has an upwardly protruding curved surface (i.e., non-planar surface) due to the touch scanner 621 by placing the touch scanner 621 on the placing portion 62 on the upper surface 61. Furthermore, the article placing portion 6, in which the touch scanner 621 is placed on the placing portion 62, protrudes upward from the basket placing surface 21 of the basket placing table 2 and the bag placing surface 412 of the bagging portion 41.

Furthermore, the placing portion 62 is located substantially immediately below the scanner 46 in the product flow direction (width direction of self-POS terminal 1) indicated by an arrow Y. Note that, in the first embodiment, as illustrated in FIG. 3, the placing portion 62 is not located substantially immediately below the scanner 46 in a depth direction of the self-POS terminal 1. That is, the placing portion 62 is located on a front side (customer side) of the scanner 46 in the depth direction of the self-POS terminal 1.

In the first embodiment having such a configuration, the customer places the basket K containing a product to be purchased on the basket placing surface 21 of the basket placing table 2. The stopper 24 provided on the basket placing table 2 prevents the basket K from protruding to the side of the placing portion 62 at the time when the basket K is placed on the basket placing surface 21 of the basket placing table 2, and prevents the basket K from moving to the side of the placing portion 62 at the time when a product is removed from the basket K. Therefore, the product in the basket K is not located directly below the scanner 46 (i.e., the stopper 24 regulates protrusion and movement of the product in the basket K to the side of the scanner 46), so that the scanner 46 does not erroneously read the product in the basket K.

The customer directs the symbol attached to the product toward the scanner 46 while removing the product from the basket K and moving the product in a direction of the arrow Y (movement direction of product). The scanner 46 reads the directed symbol. Thereafter, the customer moves the product whose symbol has been read in the direction of the arrow Y, and puts the product into the bag F. The customer performs the product registration operation by performing this operation on all products in the basket K. The self-POS terminal 1 executes the product registration processing and the settlement processing for a product for which the customer has performed the product registration operation.

When the shape of a product read by the scanner 46 is easily broken, the customer temporarily places the product on the temporary placing table 45. Then, after symbols of all the products are read, the products placed on the temporary placing table 45 are finally bagged. Since the scanner 46 is provided immediately above the article placing portion 6 (i.e., provided at position away from the bagging portion 41), the scanner 46 is less likely to perform double reading of erroneously reading a raised product again even when an operation of, for example, raising a product from the bag F for organizing the inside of the bag F is performed at the time of bagging the product. Furthermore, the placing portion 62 has a shape of an upwardly protruding curved surface (i.e., non-planar surface) since the touch scanner 621 is placed. It is thus difficult to place a product on the placing portion 62, so that it is possible to prevent a product from being placed on the placing portion 62. Therefore, a product cannot be inadvertently placed at a position near the scanner 46, so that a symbol is prevented from being read by the scanner 46.

The self-POS terminal 1 of the first embodiment described above includes: the basket placing table 2 provided for placing the basket K containing a product; the scanner 46 that is provided on a downstream side of the basket placing table 2 in a movement direction of the product and that reads a symbol attached to the product removed from the basket K placed on the basket placing table 2; the bagging portion 41 that is provided on a downstream side of the scanner 46 in the movement direction of the product and that is provided for bagging the product whose symbol has been read by the scanner 46 into the bag F that has been set; the article placing portion 6 including the placing portion 62 provided for placing the touch scanner 621 on an upper surface, provided below an installation position of the scanner 46 between the basket placing table 2 and the bagging portion 41; and the stopper 24 that regulates protrusion of the basket K placed on the basket placing table 2 to the article placing portion 6.

The self-POS terminal 1 of the first embodiment as described above does not easily put a product close to the scanner 46, so that the scanner 46 can be prevented from erroneously reading a symbol attached to the product.

### (Second Embodiment)

A second embodiment will now be described. In the second embodiment, the same components as those in the first embodiment are denoted by the same reference signs, and the description thereof will be omitted or simplified. In the second embodiment, the basket placing table 2 and the product register 4 have a configuration equivalent to that in the first embodiment. In contrast, the article placing portion 6 has a configuration different from that in the first embodiment. The arrangement relation between the basket placing table 2, the article placing portion 6, and the product register 4 is the same as that in the first embodiment.

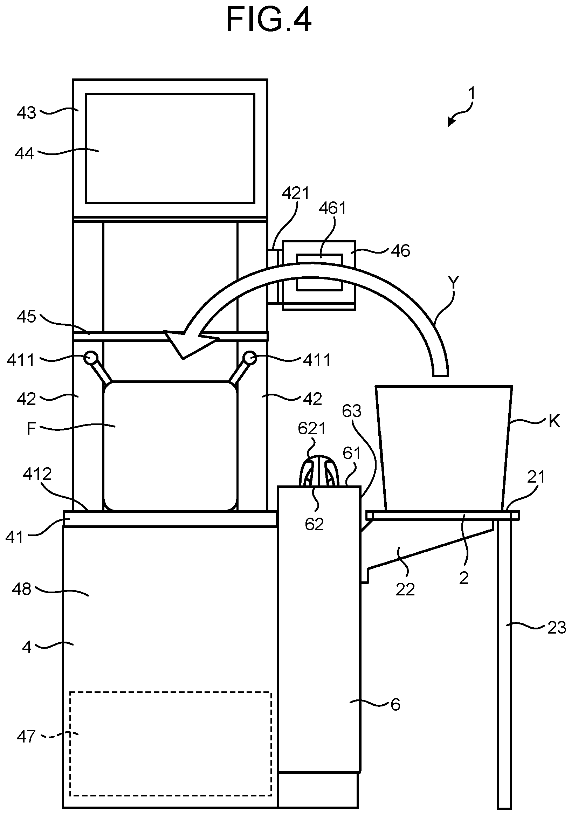

The article placing portion 6 according to the second embodiment will now be described. FIG. 4 is a front view of the self-POS terminal 1 (product sales data processing device) of a second embodiment. As illustrated in FIG. 4, the article placing portion 6 of the second embodiment is taller than the article placing portion 6 in the first embodiment. Specifically, as illustrated in FIG. 4, the article placing portion 6 of the second embodiment includes a protrusion 63 protruding upward from the height of the basket placing surface 21 of the basket placing table 2 and the height of the bag placing surface 412 of the bagging portion 41. That is, in the article placing portion 6 of the second embodiment, the upper surface 61, the placing portion 62, and the touch scanner 621 are all provided at positions higher than those of the basket placing surface 21 and the bag placing surface 412.

In the second embodiment as described above, the protrusion 63 functions as a regulating portion. When the basket K is placed on the basket placing surface 21 of the basket placing table 2, the placed basket K abuts on the protrusion 63. Movement to the side of the placing portion 62 is regulated by the protrusion 63. Thus, the basket K does not protrude to the side of the placing portion 62. The basket K does not move to the side of the placing portion 62 when a product is removed from the basket K. Therefore, the product in the basket K is not located directly below the scanner 46 (i.e., the protrusion 63 regulates protrusion and movement of the product in the basket K to the side of the scanner 46), so that the scanner 46 does not erroneously read the product in the basket K.

In the self-POS terminal 1 of the second embodiment, since the scanner 46 is provided immediately above the article placing portion 6 (i.e., provided at position away from the bagging portion 41), the scanner 46 is less likely to perform double reading of erroneously reading a raised product again even when an operation of, for example, raising the product from the bag F for organizing the inside of the bag F is performed at the time of bagging a product. Furthermore, the placing portion 62 has an upwardly protruding curved surface (i.e., non-planar surface) since the touch scanner 621 is placed. It is thus difficult to place a product on the placing portion 62, so that it is possible to prevent a product from being placed on the placing portion 62. Therefore, a product cannot be inadvertently placed at a position near the scanner 46, so that a symbol is prevented from being read by the scanner 46.

The self-POS terminal 1 of the second embodiment as described above includes: the basket placing table 2 provided for placing the basket K containing a product; the scanner 46 that is provided on a downstream side of the basket placing table 2 in a movement direction of the product and that reads a symbol attached to the product removed from the basket K placed on the basket placing table 2; the bagging portion 41 that is provided on a downstream side of the scanner 46 in the movement direction of the product and that is provided for bagging the product whose symbol has been read by the scanner 46 into the bag F that has been set; the article placing portion 6 including the placing portion 62 provided for placing the touch scanner 621 on the upper surface 61, provided below an installation position of the scanner 46 between the basket placing table 2 and the bagging portion 41; and the protrusion 63 that regulates protrusion of the basket K placed on the basket placing table 2 to the article placing portion 6.

The self-POS terminal 1 of the second embodiment as described above does not easily put a product close to the scanner 46, so that the scanner 46 can be prevented from erroneously reading a symbol attached to the product.

Although the first embodiment and the second embodiment of the present invention have been described above, these embodiments are presented as an example, and are not intended to limit the scope of the invention. These embodiments can be implemented in various other forms, and various omissions, substitutions, changes, and combinations can be made without departing from the gist of the invention. These embodiments and variations thereof are included in the scope and gist of the invention, and are included in the invention described in claims and the equivalent scope thereof.

For example, in the first embodiment, the stopper 24 is made of a rod-shaped metal. This is, however, not a limitation. The stopper 24 may be a plate-like member including, for example, resin.

Furthermore, the first embodiment and the second embodiment, the touch scanner 621 has been described as one example of an article, and the placing table of the touch scanner 621 has been described as one example of the placing portion 62. This is, however, not a limitation. The article may be, for example, a small item such as a fork, a spoon, and chopsticks to be attached to a product. The placing portion 62 may be a storage box for these small items, or may be a storage box for storing small bags for storing fresh foods and the like. Furthermore, the placing portion 62 may be a disposal box for storing unnecessary receipts.

Furthermore, in the first embodiment and the second embodiment, the basket placing table 2 on which the basket K containing a product is placed has been described as one example of the product placing portion. This is, however, not a limitation. The product placing portion may be a table for directly placing a product to be purchased by a customer. Furthermore, the product placing portion may be a table on which an object other than the basket K containing a product is placed. For example, when a cart on which a product to be purchased is placed is placed alongside on the article placing portion 6, the cart corresponds to the product placing portion.

### CITATION LIST

### Patent Literature

Patent Literature 1: JP 2011-54038 A

## Claims

1. A product sales data processing device of self-service type, comprising:
a product placing portion provided for placing a product;
a scanner that is provided on a downstream side of the product placing portion in a movement direction of the product and that reads a symbol attached to the product removed from the product placing portion;
a bagging portion that is provided on a downstream side of the scanner in the movement direction of the product and that is provided for bagging the product whose symbol has been read by the scanner into a bag that has been set;
an article placing portion including a placing portion provided for placing an article related to sale of the product on an upper surface, provided below an installation position of the scanner between the product placing portion and the bagging portion; and
a regulating portion that regulates protrusion of the product placed on the product placing portion to the article placing portion.

2. The product sales data processing device according to claim 1,
wherein the regulating portion is a stopper provided near a boundary between the product placing portion and the article placing portion.

3. The product sales data processing device according to claim 1,
wherein the regulating portion is a protrusion provided on the article placing portion and protruding upward from the bagging portion and the product placing portion.

4. The product sales data processing device according to claim 1,
wherein the article placing portion has a protruding shape in an upward direction.

5. The product sales data processing device according to claim 4,
wherein the article placing portion has the protruding shape by placing, on an upper surface, a handheld scanner that reads the symbol, and
the handheld scanner is located below the scanner.

6. The product sales data processing device according to claim 4,
wherein the article placing portion has the protruding shape by providing, on an upper surface, a storage box that stores an article attached to the product, and
the storage box is located below the scanner.

7. The product sales data processing device according to claim 1,
wherein a display that displays information on a product whose symbol has been read by the scanner is provided above the bagging portion.

8. The product sales data processing device according to claim 7,
wherein the display is provided on an upper portion of a pillar standing upward from a housing, the bagging portion being formed on an upper surface of the housing, and
the scanner is attached to the pillar.
